# EUROPÄISCHE PATENTSCHRIFT

(11) **EP 2 899 070 B1**
(45) Veröffentlichungstag und Bekanntmachung des Hinweises auf die Patenterteilung: **03.03.2021**
(21) Anmeldenummer: 14189108.5
(22) Anmeldetag: 15.10.2014
(51) Int. Cl.: B60R 5/04

(54) **Vorrichtung zur Höhenverstellung eines Ladebodens in einem Fahrzeug**
Device for adjusting the height of a loading platform in a vehicle
Dispositif de réglage en hauteur d'un sol de chargement dans un véhicule

(30) Priorität: 28.01.2014 DE 102014201458
(43) Veröffentlichungstag der Anmeldung: 29.07.2015
(73) Patentinhaber: Volkswagen Aktiengesellschaft, 38440 Wolfsburg (DE)
(72) Erfinder: Gaas, Matthias, 38442 Wolfsburg (DE)

(56) Entgegenhaltungen:
- EP-A1- 1 728 684
- EP-A1- 2 048 031
- WO-A1-2013/178199
- DE-A1- 10 012 767
- FR-A1- 2 821 035
- JP-A- 2005 219 702
- JP-A- 2006 327 466
- JP-A- 2008 013 140
- JP-A- 2008 247 167
- JP-A- 2009 298 180
- US-A1- 2014 015 271

## Beschreibung

Die Erfindung betrifft eine Vorrichtung zur Höhenverstellung eines Ladebodens für den Laderaum eines Fahrzeugs, insbesondere eines Kraftfahrzeugs, sowie ein Fahrzeug mit einer solchen Vorrichtung.

Höhenverstellbare Ladeböden können in unterschiedlichen Höhenpositionen im Laderaum eines Kraftfahrzeugs abgelegt werden. Dadurch kann der Laderaum an unterschiedliche Raumerfordernisse angepasst werden.

Aus der JP 2008-013140 A ist eine Vorrichtung zur Höhenverstellung eines Ladebodens bekannt. Der Ladeboden weist zwei Bodensegmente auf, wobei an einem Bodensegment ein in einer Kulissenbahn geführter Zapfen angeordnet ist. Der Ladeboden ist so in einer unteren Ablageposition und einer oberen Ablageposition ablegbar.

Die JP 2005-219702 A offenbart eine Vorrichtung zur Höhenverstellung eines Ladebodens, bei der der Ladeboden eine untere und eine obere Ablageposition einnehmen kann. Dazu ist an dem Ladeboden ein in einer Kulissenbahn geführter Zapfen vorgesehen.

Die DE 100 12 767 A1 zeigt einen Ladeboden, der mit Hilfe einer Hebeeinrichtung von einer Ruhestellung in eine vollständig ausgezogene Stellung bringbar ist.

Aus der EP 1 728 684 A1 ist eine Vorrichtung zur Höhenverstellung des Ladebodens bekannt, bei der der Ladeboden über eine Kulissenführung verstellbar gelagert ist. Bei einem Verstellvorgang ist der Ladeboden zumindest in einem ersten, eine untere Ladeboden-Ablageposition definierenden Kulissengang ablegbar oder in einem zweiten, eine obere Ladeboden-Ablageposition definierenden Kulissengang ablegbar.

Aus der US 2014/015271 A1 ist eine gattungsbildende Vorrichtung zur Höhenverstellung eines Ladebodens bekannt. Dabei greift ein federbeaufschlagter Führungsstift, der an dem verstellbaren Ladeboden angebracht ist, in eine Führungsbahn ein. Je eine Führungsbahn ist dabei in der jeweiligen Karosserieseitenwand vorgesehen.

Auch aus der JP 2009-298180 A ist eine Vorrichtung zur Höhenverstellung des Ladebodens bekannt, bei der ein federbeaufschlagtes Stützelement dem Ladeboden zugeordnet ist.

Ferner ist aus der WO 2013/178199 A1 ein verstellbarer Ladeboden mit drei Bodenplatten bekannt. Der Ladeboden ist in seiner oberen Stellung durch eine Feststellvorrichtung gesichert, die durch eine an der Seitenwand angeordnete, aufklappbare Stütze, durch ein an der Unterseite der vorderen Bodenplatte angeordnetes Gehäuse und durch einen an der Unterseite der mittleren Bodenplatte angeordneten arretierenden Betätigungsfinger gebildet wird.

In der unteren Ablageposition kann der Ladeboden mittelbar oder unmittelbar auf dem heckseitigen Bodenblech der Fahrzeugkarosserie stabil abgestützt sein. Demgegenüber ist eine solche unmittelbare Abstützung auf dem Bodenblech in der oberen Ablageposition nicht gegeben. Hier können vielmehr zusätzliche Stützelemente vorgesehen werden. Unter Zwischenlage dieser Stützelemente kann sich der in der oberen Ablageposition befindliche Ladeboden stabil abstützen. Vor der Positionierung des Ladebodens in seiner oberen Ablageposition müssen die Stützelemente montagetechnisch aufwändig vom Fahrzeugnutzer im Laderaum montiert werden.

Die montierten Stützelemente wirken bei einer Höhenverstellung nach unten als eine Störkontur, die den Verstellvorgang behindert. Deswegen müssen die Stützelemente vor einer Höhenverstellung in die untere Ablageposition demontiert werden, um eine Verstellbewegung des Ladebodens in die untere Ablageposition nicht zu blockieren.

Die Aufgabe der Erfindung besteht darin, eine Vorrichtung zur Höhenverstellung eines Ladebodens bereitzustellen, bei der der Ladeboden in einfacher Weise sowie in stabiler Abstützung in unterschiedliche Ablageposition verstellbar ist.

Die Aufgabe ist durch die Merkmale des Patentanspruches 1 gelöst. Bevorzugte Weiterbildungen der Erfindung sind in den Unteransprüchen offenbart.

Gemäß dem Patentanspruch 1 weist die Vorrichtung zumindest ein Stützelement auf, das an einer fahrzeugseitigen, ortsfesten Lagerstelle verstellbar gelagert ist. Das Stützelement ist somit nicht mehr starr im Laderaum angebunden, sondern verstellbar, wodurch es in einer Gebrauchslage den Ladeboden in seiner oberen Ablageposition abstützt. Demgegenüber kann es aus der Gebrauchslage in eine Nichtgebrauchslage verstellt werden, um beim Verstellvorgang des Ladebodens in die untere Ablageposition nicht als Störkontur den Verstellweg zu blockieren.

Die Lagerstelle zur verstellbaren Lagerung des Stützelementes ist in einer, den Laderaum in einer Fahrzeugquerrichtung begrenzenden Seitenwand vorgesehen. Der Laderaum kann in der Fahrzeuglängsrichtung nach vorne durch die Rückenlehne einer fondseitigen Fahrzeug-Sitzbank begrenzt sein und in der Fahrzeuglängsrichtung nach hinten durch eine heckseitige Fahrzeugöffnung zugänglich sein.

Wie oben erwähnt, kann das Stützelement zwischen der Gebrauchslage und einer Nichtgebrauchslage verstellt werden. In der Nichtgebrauchslage kann das Stützelement in etwa flächenbündig mit der Laderaum-Seitenwand ausgerichtet sein oder in der Laderaum-Seitenwand versenkt sein. Auf diese Weise ist gewährleistet, dass das Stützelement bei einem Verstellvorgang des Ladebodens von seiner oberen Ablageposition in seine untere Ablageposition nicht als Störkontur wirkt. In der unteren Ablageposition des Ladebodens ist demzufolge bevorzugt das Stützelement in seiner Nichtgebrauchslage angeordnet.

Um eine betriebssichere Abstützung des Ladebodens in seiner oberen Ablageposition zu gewährleisten, ist dem Stützelement ein Federelement zugeordnet, zum Beispiel eine Blattfeder, mit der das Stützelement federnd nachgiebig in Richtung auf die Gebrauchslage vorgespannt ist. In der Gebrauchslage kann das Stützelement bevorzugt in der Fahrzeugquerrichtung nach innen in den Laderaum hineinragen.

Erfindungsgemäß weist das Stützelement an seiner, in der Fahrzeughochrichtung betrachtet oberen Seite einen Tragsteg auf, auf dem der Ladeboden in seiner oberen Ablageposition randseitig abstützbar ist. Der Ladeboden überlappt mit seiner, in der Fahrzeuglängsrichtung verlaufenden seitlichen Außenkante mit einem Übermaß in Fahrzeugquerrichtung mit dem Tragsteg. Das Übermaß ist derart bemessen, dass eine sichere und stabile randseitige Auflage des Ladebodens gewährleistet ist.

Erfindungsgemäß weist das verstellbare Stützelement zur Verstellung zwischen der Gebrauchslage und der Nichtgebrauchslage eine spezielle Betätigungskontur auf, bei deren Betätigung das Stützelement in seine Nichtgebrauchslage verstellbar ist. Dies ist im Hinblick auf eine Bauteilreduzierung vorteilhaft. Die Betätigungskontur kann unmittelbar im Bereich des Tragstegs des Stützelementes ausgebildet sein. Der Tragsteg geht erfindungsgemäß in der Fahrzeuglängsrichtung in die Betätigungskontur über. Die Betätigungskontur ist dabei derart ausgelegt, dass bei einem Verstellvorgang des Ladebodens von seiner oberen Ablageposition in seine untere Ablageposition die seitliche Außenkante des Ladebodens in Ansatz mit der Betätigungskontur am Stützelement bringbar ist. Durch nutzerseitige Krafteinwirkung auf den Ladeboden wird an der Betätigungskontur eine Querkraftkomponente erzeugt, mit der das Stützelement in seine Nichtgebrauchslage verstellbar ist. In diesem Fall wird daher bedientechnisch günstig das Stützelement selbsttätig während des Stellvorgangs in seine Nichtgebrauchslage verstellt, ohne unmittelbare manuelle Betätigung durch den Benutzer.

Erfindungsgemäß weitet sich die Betätigungskontur im Konturverlauf in der Fahrzeuglängsrichtung um einen Querversatz bis seitlich außerhalb der Außenkante des Ladebodens kontinuierlich aus.

Wie oben erwähnt, ist es bevorzugt, dass das Stützelement in seiner Nichtgebrauchslage im Wesentlichen flächenbündig in der Laderaum-Seitenwand angeordnet ist. Um dies zu gewährleisten, kann das Stützelement ein Federelement aufweisen, das in der unteren Ladeboden-Ablageposition in der Fahrzeugquerrichtung zwischen dem Stützelement und der Ladeboden-Außenkante abgestützt ist. Das Federelement ist dabei mit einer solchen Federrate ausgelegt, dass es unter Überwindung der Rückstellkraft das Stützelement zuverlässig in seine Nichtgebrauchslage drückt.

Erfindungsgemäß ist das Stützelement eine schwenkbar an der Lagerstelle angelenkte Klappe. Die Klappe ist an ihrer Bodenseite um eine Schwenkachse an der ortsfesten Lagerstelle angelenkt. Die Schwenkachse kann sich wiederum im Wesentlichen in der Fahrzeuglängsrichtung erstrecken. Zudem kann die Schwenkachse bevorzugt auf der, dem Tragsteg gegenüberliegenden Seite angeordnet sein.

Zur Durchführung des obigen Verstellvorgangs zwischen den Ablagepositionen kann der Ladeboden über eine Kulissenführung verstellbar gelagert sein, bei der ein ladebodenseitiger Kulissenzapfen in eine fahrzeugseitige Kulissenbahn eingreift. Bei einem Verstellvorgang kann der Ladeboden zumindest in einem ersten, die untere Ladeboden-Ablageposition definierenden Kulissengang abgelegt werden oder in einem zweiten, die obere Ladeboden-Ablageposition definierenden Kulissengang abgelegt werden.

Um einen besonders leichtgängigen Verstellvorgang zu gewährleisten, ist es bevorzugt, wenn der Ladeboden kein starres flächiges Bauteil ist, sondern vielmehr zumindest zwei zueinander verstellbare Bodensegmente aufweist, die beim Verstellvorgang und/oder in den Ablagepositionen zueinander mechanisch spannungsfrei verstellt sind. Bevorzugt können die zumindest zwei Bodensegmente des Ladebodens an einer, in der Fahrzeugquerrichtung ausgerichteten Faltachse schwenkbar miteinander verbunden sein. Die Bodensegmente selbst können dabei wiederum starre Bauteile bilden.

Die Höhenverstellung des Ladebodens von seiner oberen Ablageposition in seine untere Ablageposition kann sich in diesem Fall wie folgt gestalten: So können die Bogensegmente des Ladebodens zunächst noch in der oberen Ablageposition im Wesentlichen ebenflächig zueinander sowie horizontal ausgerichtet sein. Zur Einleitung der Höhenverstellung kann zumindest ein in der Fahrzeuglängsrichtung hinteres Bodensegment des Ladebodens vom Nutzer schräg nach hinten oben um eine Faltachse des Ladebodens hochgeschwenkt werden. Darauffolgend kann gegebenenfalls der Ladeboden in der Fahrzeuglängsrichtung nach hinten geschoben werden, bis sich die am vorderen Bodensegment ausgebildeten Kulissenzapfen in den unteren Kulissengang verlagern. Anschließend kann der Ladeboden entlang des unteren Kulissengangs in der Fahrzeuglängsrichtung nach vorne verschoben werden. Die Linearverlagerung nach vorne erfolgt gegebenenfalls zusammen mit einer Schwenkbetätigung, bei der das schräg angestellte, hintere Bodensegment unter benutzerseitiger Krafteinwirkung wie ein Schwenkhebel um eine Faltachse in Richtung auf die untere Ablageposition geschwenkt werden kann. Im Laufe dieser Schwenkbewegung kommt die Außenkante des Ladebodens in Anschlag mit der Betätigungskontur des Stützelements, wodurch das Stützelement in seine Nichtgebrauchslage gedrückt wird.

Um den Verstellvorgang noch leichtgängiger zu gestalten, kann der Ladeboden mehr als zwei Bodensegmente aufweisen. Diese können bevorzugt an ihren Faltachsen mit Drehanschlägen versehen sein. Mittels solcher Drehanschläge können Kippbewegungen zwischen den Bodensegmenten zum Beispiel bis zu einer ebenflächigen Ausrichtung der Bodensegmente zugelassen sein. Jedoch können die Drehanschläge ab Erreichen der ebenflächigen Ausrichtung derartige Kippbewegungen blockieren. Mit den Drehanschlägen wird sichergestellt, dass bei einer benutzerseitigen Schwenkbetätigung nach unten die Bodensegmente, die an der Schwenkbetätigung beteiligt sind, einen zueinander drehfesten, verbindungssteifen Bauteilverbund bilden, der eine einwandfreie Kraftübertragung auf die Betätigungskontur des Stützelements sicherstellt.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer perspektivischen Teildarstellung den Laderaum eines Fahrzeugs in einer Ansicht von außen auf die heckseitige Fahrzeugöffnung, wobei der gestrichelt angedeutete Ladeboden in der oberen Ablageposition ist;
- Fig. 2a und 2b: jeweils eine Schnittdarstellung entlang der Schnittebene A-A aus der Fig. 1;
- Fig. 3: eine der Fig. 2 entsprechende Ansicht mit dem Ladeboden in seiner unteren Ablageposition;
- Fig. 4 bis 9: jeweils Seitenansichten, die den Ablauf einer Höhenverstellung des Ladebodens von seiner oberen Ablageposition in seine untere Ablageposition veranschaulichen; und
- Fig. 10 bis 12: jeweils Ansichten von Vorspanneinrichtungen des Ladebodens.

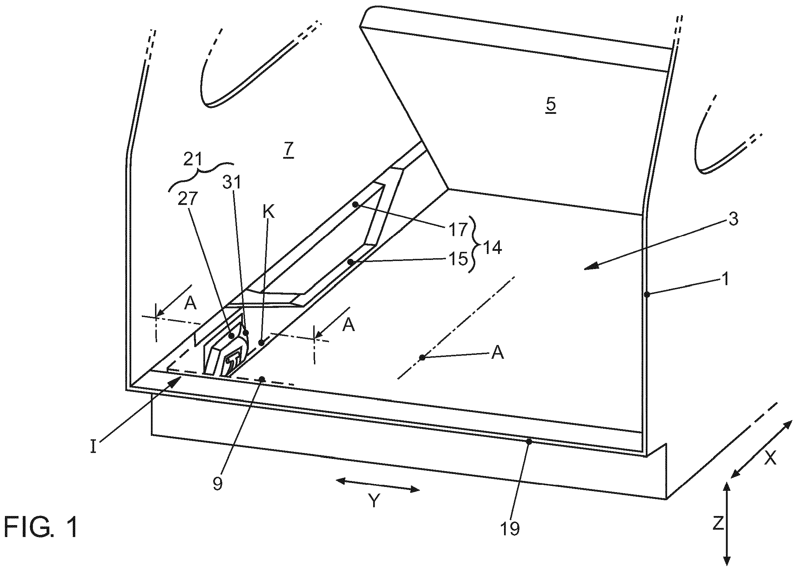

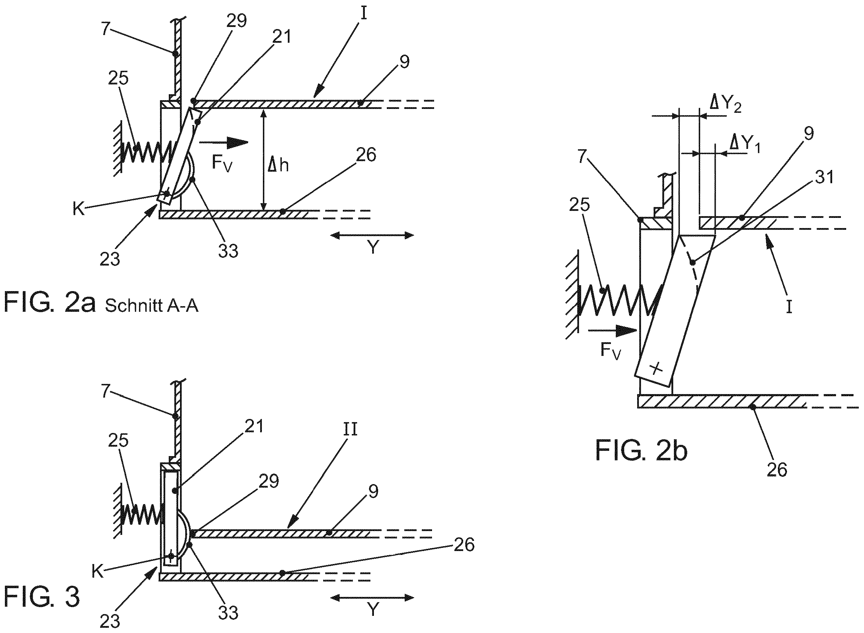

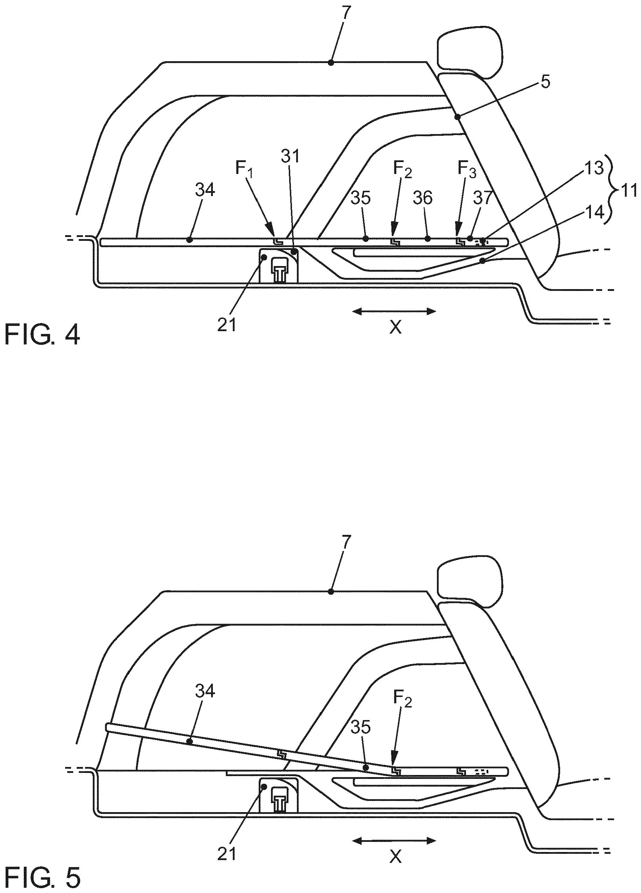

In der Fig. 1 ist in einer grob schematischen Darstellung mit einer Blickrichtung von außen durch eine Hecköffnung 1 des Fahrzeugs ein Laderaum 3 gezeigt. Der Laderaum 3 ist in der Fahrzeuglängsrichtung x nach vorne durch die Rückseite 5 fondseitiger Fahrzeugsitze oder einer fondseitigen Rücksitzbank begrenzt. In der Fahrzeugquerrichtung y ist der Laderaum 3 durch Seitenwände 7 begrenzt. In der Fahrzeughochrichtung z nach unten ist der Laderaum 3 durch einen Ladeboden 9 begrenzt, der in der Fig. 1 lediglich gestrichelt angedeutet ist. Der Ladeboden 9 ist über eine Kulissenführung 11 (Fig. 4) zwischen einer oberen Ladeboden-Ablageposition I (Fig. 1 oder 2a) und einer unteren Ladeboden-Ablageposition II (Fig. 3) höhenverstellbar. Die Kulissenführung 11 ist gemäß der Fig. 4 durch einen ladebodenseitigen Kulissenzapfen 13 und durch eine fahrzeugseitige Kulissenbahn 14 aufgebaut, in die der Kulissenzapfen 13 eingreift. Die Kulissenbahn 14 weist gemäß der Fig. 1 einen unteren Kulissengang 15, der die untere Ladeboden-Ablageposition II definiert, und einen oberen Kulissengang 17 auf, der die obere Ladeboden-Ablageposition I definiert. Die Kulissenführung 11 ist an jeder der beiden gegenüberliegenden Laderaum-Seitenwänden 7 vorgesehen, und zwar spiegelbildlich mit Bezug auf eine Fahrzeugmittellängsachse A (Fig. 1).

In der, in der Fig. 3 gezeigten unteren Ablageposition II ist der Ladeboden 9 formstabil mittelbar oder unmittelbar auf dem heckseitigen Bodenblech 21 des Fahrzeugs abgestützt. In der Fig. 1 ist der Ladeboden 9 in seiner oberen Ablageposition I gezeigt. In der oberen Ablageposition I befindet sich der Ladeboden 9 in etwa auf gleicher Höhe wie die, die Ladeöffnung 1 nach unten begrenzende Ladekante 19. In der oberen Ablageposition I ist der Ladeboden um einen Höhenversatz Δh (Fig. 2a) vom heckseitigen Bodenblech 21 beabstandet. Um dennoch eine formstabile Abstützung des Ladebodens 9 zu gewährleisten, sind an beiden gegenüberliegenden Laderaum-Seitenwänden 7 jeweils Stützelemente 21 vorgesehen, auf denen sich der Ladeboden 9 abstützt.

Wie aus den Figuren hervorgeht, ist das Stützelement 21 als eine verstellbare Klappe ausgebildet, die bodenseitig an einer angedeuteten Lagerstelle 23 in einer Öffnung der Seitenwand 7 schwenkbar angelenkt ist, und zwar um eine achsparallel zur Fahrzeuglängsrichtung x verlaufenden Kippachse K. Die Klappe 21 ist zwischen einer Gebrauchslage (Fig. 2a) und einer später beschriebenen Nichtgebrauchslage (Fig. 3) verstellbar.

Wie in der Fig. 2a und 3 angedeutet ist, weist die Klappe 21 ein (zum Beispiel als Blattfeder ausgeführtes) Federelement 25 auf, mit dem die Klappe 21 federnd nachgiebig mit einer Vorspannkraft Fv in Richtung auf die Gebrauchslage vorgespannt ist. Die Klappe 21 ragt in ihrer Gebrauchslage in der Fahrzeugquerrichtung y nach innen in den Laderaum 3 hinein. Auf diese Weise untergreift die Klappe 21 mit einem oberseitigen Tragsteg 27 (Fig. 2b) den Rand des Ladebodens 9, wodurch die in der Fahrzeuglängsrichtung x verlaufende Außenkante 29 des Ladebodens 9 mit einem Übermaß Δy₁ mit dem Tragsteg 27 der Stützklappe 21 überlappt. Das Übermaß Δy₁ ist derart bemessen, dass eine sichere Abstützung des Ladebodens 9 auf der Stützklappe 21 gewährleistet ist.

Wie aus der Figuren weiter hervorgeht, ist die Stützklappe 21 mit einer zusätzlichen Betätigungskontur 31 ausgeführt. Diese kann gemäß späterer Beschreibung mit einer Außenkante 29 (Fig. 2a, 2b oder 3) des Ladebodens 9 derart zusammenwirken, dass bei einer Höhenverstellung in die untere Ladeboden-Ablageposition II die Stützklappe 21 in ihre Nichtgebrauchslage zurückgesetzt wird. Gemäß den Figuren ist die Betätigungskontur 31 eine Schrägfläche, die sich in der Fahrzeuglängsrichtung x nach vorne an den Tragsteg 27 der Stützklappe 21 anschließt. Der Konturverlauf der Betätigungskontur 31 ist in der Fig. 2b gezeigt. Demzufolge ist die Betätigungskontur 31 der Stützklappe 21 in ihrer Gebrauchslage in der Fahrzeugquerrichtung y um einen Querversatz Δy₂ bis seitlich außerhalb der Ladeboden-Außenkante 29 kontinuierlich ausgeweitet.

Wie aus der Fig. 2a, 2b oder 3 weiter hervorgeht, weist die Stützklappe 21 ein zusätzliches Federelement 33 auf, das in der unteren Ablageposition II des Ladebodens 9 in der Fahrzeugquerrichtung y betrachtet zwischen der Stützklappe 21 und der Außenkante 29 des Ladebodens 9 abgestützt ist. Die Federrate des zweiten Federelementes 33 ist derart ausgelegt, dass in der unteren Ladeboden-Ablageposition II das zweite Federelement 33 unter Überwindung der Vorspannkraft Fv die Stützklappe 21 in ihre Nichtgebrauchslage drückt, in der sie in etwa flächenbündig mit der Seitenwand 7 positioniert ist. Das zweite Federelement 33 kann als ein an der Stützklappe 21 angespitzter Kunststoff-Federschenkel realisiert sein.

Damit die Höhenverstellung zwischen den Ablagepositionen I, II leichtgängig durchführbar ist, ist der Ladeboden 9 in der Fahrzeuglängsrichtung nicht durchgängig starr ausgeführt, sondern vielmehr durch insgesamt vier Bodensegmente 34, 35, 36, 37 ausgebildet. Diese sind über Faltachsen F miteinander schwenkbar in Verbindung. Die Kulissenzapfen 13 für die Kulissenführung 11 sind dabei am, in der Fahrzeuglängsrichtung x vorderen Bodensegment 37 angeformt.

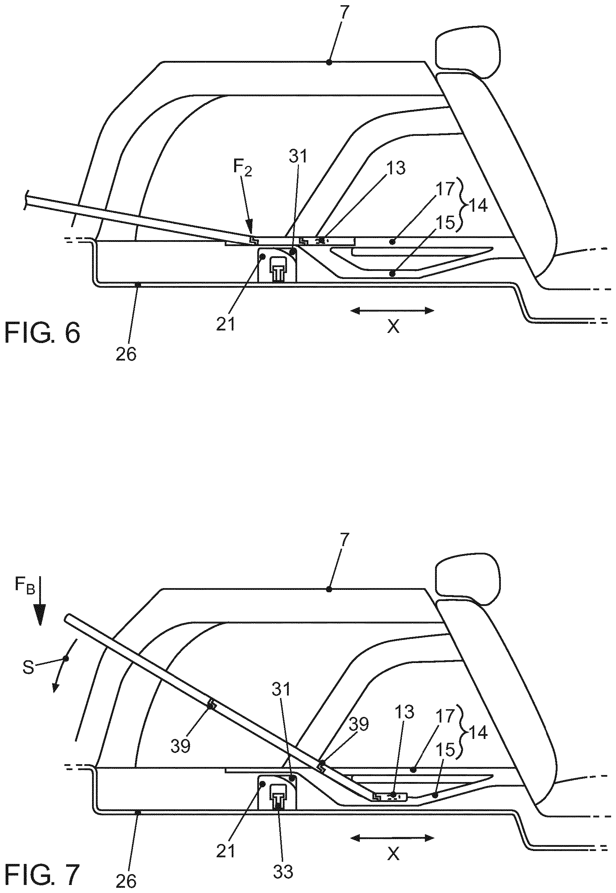

Anhand der Fig. 4 bis 9 wird nachfolgend eine Höhenverstellung des Ladebodens 9 von seiner oberen Ablageposition I bis in seine untere Ablageposition II beschrieben. Demzufolge sind in der Fig. 4 die Bogensegmente 34 bis 37 des Ladebodens 9 noch in der oberen Ablageposition I im Wesentlichen ebenflächig zueinander sowie horizontal ausgerichtet. Zur Einleitung der Höhenverstellung werden in der Fig. 5 die drei hinteren Bodensegmente 34, 35, 36 des Ladebodens 9 vom Nutzer schräg nach hinten oben um die mittlere Faltachse F₂ des Ladebodens 9 hochgeschwenkt. Darauffolgend wird der Ladeboden 9 in der Fig. 6 in der Fahrzeuglängsrichtung x nach hinten geschoben, bis sich die am vorderen Bodensegment 37 ausgebildeten Kulissenzapfen 13 in den unteren Kulissengang 15 verlagern.

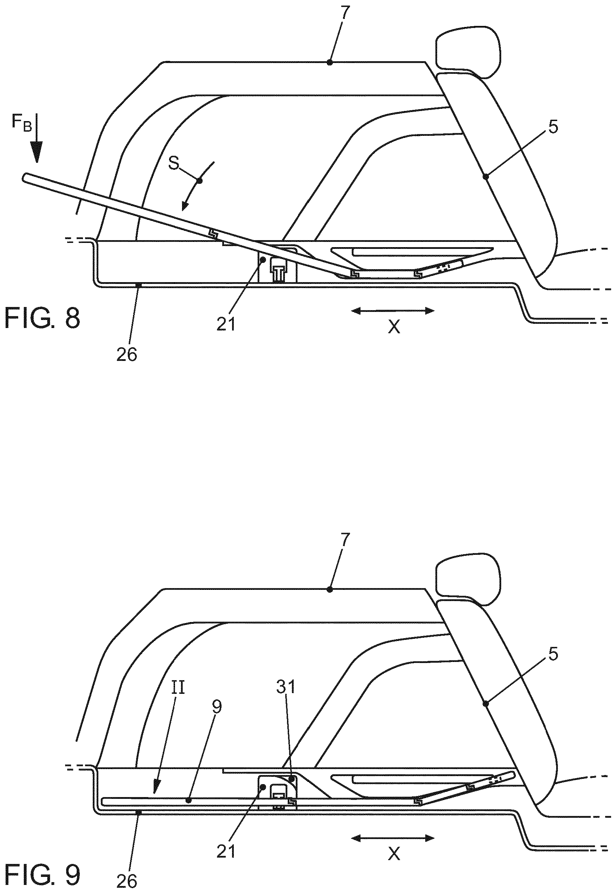

Anschließend wird der Ladeboden 9 gemäß der Fig. 7 entlang des unteren Kulissengangs 15 in der Fahrzeuglängsrichtung x nach vorne verschoben. Die Linearverlagerung nach vorne erfolgt zusammen mit einer Schwenkbetätigung S (Fig. 7 und 8), bei der die schräg angestellten Bodensegmente 34 und 35 wie ein Schwenkhebel um die mittlere Faltachse F₂ in Richtung auf die untere Ablageposition I geschwenkt werden, und zwar unter Beaufschlagung einer benutzerseitigen Betätigungskraft F_{B}. (Fig. 7 und 8). Im Laufe dieser Schwenkbewegung S kommt die Außenkante 29 des Ladebodens 9 in Anschlag mit der Betätigungskontur 31 der Stützklappe 21, wodurch die Stützklappe 21 in ihre Nichtgebrauchslage gedrückt wird.

Zur Verbesserung der Hebelwirkung des Ladebodens 9 bei der Verstellung der Stützklappe 21 sind an den Faltachsen F₁ bis F₃ Drehanschlag-Konturen 39 (Fig. 7) ausgebildet. Diese stellen sicher, dass bei der Schwenkbetätigung S (Fig. 7 und 8) nach unten die an der Schwenkbetätigung beteiligten Bodensegmente 34, 35 einen zueinander drehfesten, verbindungssteifen Bauteilverbund bilden, der eine einwandfreie Kraftübertragung auf die Betätigungskontur 31 der Stützklappe 21 sicherstellt.

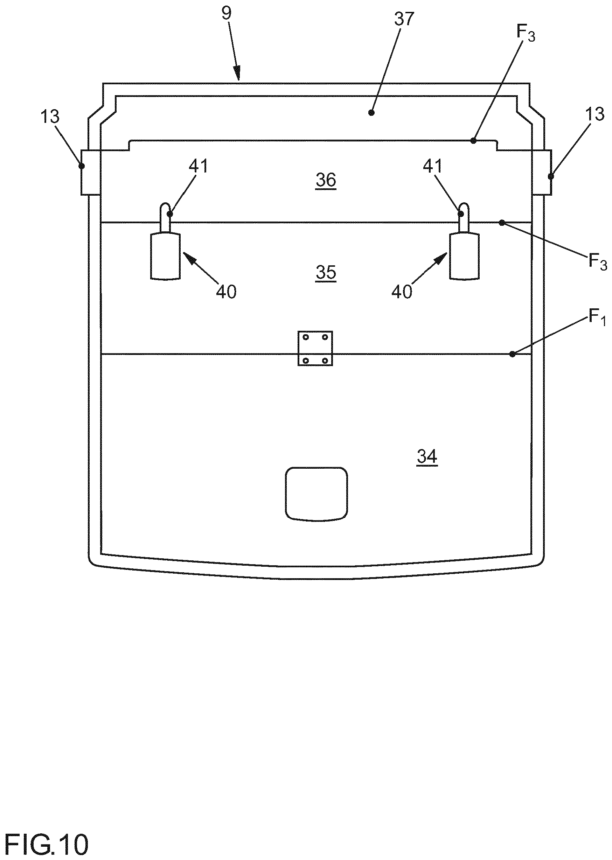

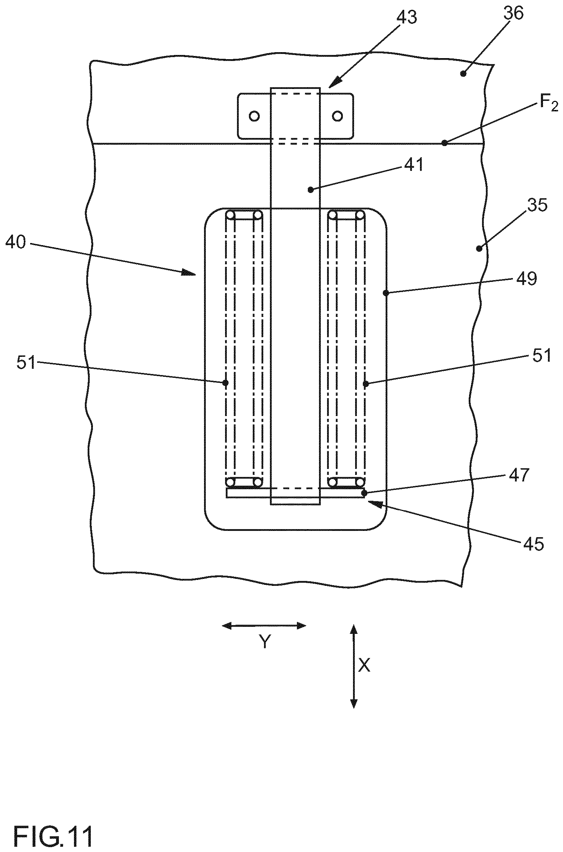

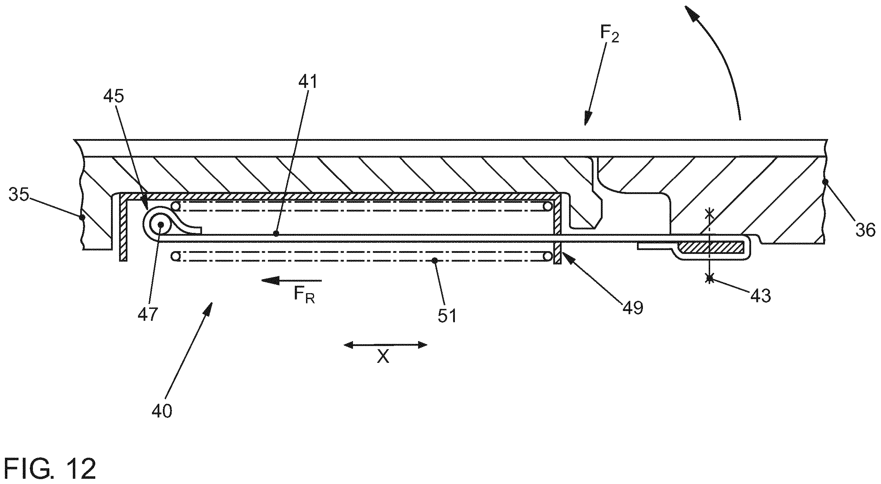

Wie aus der Fig. 10 hervorgeht, ist an der Ladeboden-Unterseite die Faltachse F₂ zwischen den Bodensegmenten 35 und 36 von Fangbändern 41 überbrückt, von denen jedes Bestandteil einer Vorspanneinrichtung 40 sind. Jedes der Fangbänder 41 ist gemäß den Fig. 11 oder 12 an einer ersten Anbindungsstelle 43 ortsfest am Rand des vorderen Bodensegments 36 fixiert. Zudem sind die Fangbänder 41 an einer zweiten Anbindungsstelle 45 am hinteren Bodensegment 35 in der Fahrzeuglängsrichtung x verstellbar gelagert. Hierzu ist jedes der Fangbänder 41 an einem Haltezapfen 47 angelenkt, der in einem Federgehäuse 49 verstellbar geführt ist und mit Hilfe von Federelementen 51 in der Fahrzeuglängsrichtung x nach hinten gegen einen nicht näher gezeigten Anschlag gedrückt ist.

Bei einer, in der Fig. 12 mit Pfeil angedeuteten Schwenkbewegung des vorderen Bodensegments 36 wird der Haltezapfen 47 unter Aufbau einer Rückstellkraft F_{R} in der Fahrzeuglängsrichtung x nach vorne verschoben. Die Rückstellkraft F_{R} wirkt daher der Schwenkbewegung entgegen, und zwar in Richtung einer ebenflächigen Ausrichtung der beiden Bodensegmente 35, 36.

Die beiden Vorspanneinrichtungen 40 sind für ein leichtgängiges bzw. komfortables Absenken des Ladebodens 9 erforderlich, und zwar speziell in der, in der Fig. 6 gezeigten Situation. In der Fig. 6 sind die Bodensegmente 34, 35 in der Fahrzeuglängsrichtung x nach hinten sowie schräg nach oben aus dem Laderaum herausgezogen. Das Bodensegment 35 ist dabei gegenüber dem Bodensegment 36 schräggestellt. Dadurch erzeugen die Vorspanneinrichtungen 40 die oben erwähnten Rückstellkraft F_{R}, so dass das Bodensegment 36 mit einer vertikalen Kraftkomponente nach unten gedrückt wird. Durch diese Kraftbeaufschlagung nach unten wird speziell ein leichtgängiges Einfahren des Kulissenstifts 13 in den unteren Kulissengang 15 begünstigt.

## Patentansprüche

1. Vorrichtung zur Höhenverstellung eines Ladebodens (9) für den Laderaum (3) eines Fahrzeugs, bei der der Ladeboden (9) in einem Verstellvorgang zumindest in einer ersten, in der Fahrzeughochrichtung (z) oberen Ablageposition (I) und in einer zweiten, in der Fahrzeughochrichtung (z) unteren Ablageposition (II) ablegbar ist,
wobei die Vorrichtung zumindest ein Stützelement (21) aufweist, das an einer Lagerstelle (23) verstellbar gelagert ist und in einer Gebrauchslage den Ladeboden (9) in seiner oberen Ablageposition (I) abstützt, und
wobei dem Stützelement (21) ein Federelement (25) zugeordnet ist, mit dem das Stützelement (21) federnd nachgiebig in Richtung auf die Gebrauchslage mit einer Vorspannkraft (Fv) vorgespannt ist,
wobei das Stützelement (21) eine um eine Kippachse (K) schwenkbar an der Lagerstelle (23) angelenkte Klappe ist,
wobei die Lagerstelle (23) in einer, den Laderaum (3) in einer Fahrzeugquerrichtung (y) begrenzenden Seitenwand (7) vorgesehen ist und wobei das Stützelement (21) eine Betätigungskontur (31) aufweist, bei deren Betätigung das Stützelement (21) in seine Nichtgebrauchslage verstellbar ist,
wobei das Stützelement (21) einen Tragsteg (27) aufweist, auf dem der Ladeboden (9) in seiner oberen Ablageposition (I) abstützbar ist, wobei eine Außenkante (29) des Ladebodens (9) mit einem Übermaß (Δy₁) mit dem Tragsteg (27) überlappt,
wobei der Tragsteg (27) des Stützelements (21) in der Fahrzeuglängsrichtung (x) in die Betätigungskontur (31) übergeht und die Betätigungskontur (31) im Konturverlauf in der Fahrzeuglängsrichtung (x) um einen Querversatz (Δy₂) bis seitlich außerhalb der Außenkante (29) des Ladebodens (9) ausgeweitet ist.

2. Vorrichtung nach Anspruch 1, **dadurch gekennzeichnet, dass** das Stützelement (21) zwischen der Gebrauchslage und einer Nichtgebrauchslage verstellbar ist, und dass in der Nichtgebrauchslage des Stützelements (21) der Ladeboden (9) in seiner unteren Ablageposition (II) angeordnet ist.

3. Vorrichtung nach Anspruch 2, **dadurch gekennzeichnet, dass** das Stützelement (21) ein Federelement (33) aufweist, das in der unteren Ablageposition (II) des Ladebodens (9) in der Fahrzeugquerrichtung (y) zwischen dem Stützelement (21) und der Außenkante (29) des Ladebodens (9) abgestützt ist, und dass das Federelement (33) unter Überwindung einer Vorspannkraft (Fv) das Stützelement (21) in seine Nichtgebrauchslage zurücksetzt.

4. Vorrichtung nach einem der vorhergehenden Ansprüche, **dadurch gekennzeichnet, dass** bei einem Verstellvorgang des Ladebodens (9) von seiner oberen Ablageposition (I) in seine untere Ablageposition (II) die Außenkante (29) des Ladebodens (9) in Ansatz mit der Betätigungskontur (31) bringbar ist, und zwar unter Krafteinwirkung (F_{B}) zur Erzeugung einer Querkraftkomponente, mit der das Stützelement (21) in seine Nichtgebrauchslage verstellbar ist.

5. Vorrichtung nach Anspruch 1, **dadurch gekennzeichnet, dass** der Ladeboden (9) zur Durchführung des Verstellvorgangs in einer Kulissenführung (11) geführt ist, und dass der Ladeboden (9) in einem ersten, die untere Ladeboden-Ablageposition (II) definierenden Kulissengang (15) oder in einem zweiten, die obere Ladeboden-Ablageposition (I) definierenden Kulissengang (17) ablegbar ist.

6. Vorrichtung nach Anspruch 5, **dadurch gekennzeichnet, dass** der Ladeboden (9) zumindest zwei zueinander verstellbare Bodensegmente (34 bis 37) aufweist, die beim Verstellvorgang und/oder in den Ablagepositionen (I, II) zueinander verstellbar sind.

7. Vorrichtung nach Anspruch 6, **dadurch gekennzeichnet, dass** die zumindest zwei Bodensegmente (34 bis 37) des Ladebodens (9) an einer in der Fahrzeugquerrichtung (y) ausgerichteten Faltachse (F₁, F₂, F₃) schwenkbar miteinander verbunden sind.

8. Vorrichtung nach Anspruch 7, **dadurch gekennzeichnet, dass** bei einem Verstellvorgang des Ladebodens (9) in seine untere Ablageposition (II) das in der Fahrzeuglängsrichtung (x) vordere Bodensegment (37) im Laderaum (3) absetzbar ist und zumindest das hintere Bodensegment (34) in einer Schrägstellung nach hinten oben gestellt ist.

9. Vorrichtung nach Anspruch 8, **dadurch gekennzeichnet, dass** bei einer Schwenkbewegung (S) in Richtung auf die untere Ablageposition (II) die Außenkante (29) des hinteren Bodensegments (34 bis 36) in Anschlag mit der Betätigungskontur (31) des Stützelements (21) kommt und das Stützelement (21) in seine Nichtgebrauchslage gedrückt wird.

10. Vorrichtung nach Anspruch 9, **dadurch gekennzeichnet, dass** bei einem Ladeboden (9) mit mehr als zwei Bodensegmenten (34 bis 37) zur Verbesserung einer Hebelwirkung des Ladebodens (9) bei der Schwenkbewegung (S) der Stützklappe (21) nach unten an der Faltachsen (F₁ bis F₃) Drehanschläge (39) ausgebildet sind, und dass mit den Drehanschlägen (39) bewirkt ist, dass bei der Schwenkbetätigung (S) nach unten die Bodensegmente (34, 35) einen zueinander drehfesten, verbindungssteifen Bauteilverbund bilden, der eine einwandfreie Kraftübertragung auf die Betätigungskontur (31) des Stützelements (21) sicherstellt.

## Claims

1. Device for adjusting the height of a loading platform (9) for the cargo compartment (3) of a vehicle, in which, in an adjustment process, the loading platform (9) can be placed at least in a first upper placement position (I) in the height direction (z) of the vehicle and in a second lower placement position (II) in the height direction (z) of the vehicle,
wherein the device has at least one support element (21) which is adjustably mounted at a bearing point (23) and, in a use position, supports the loading platform (9) in its upper placement position (I), and
wherein the support element (21) has associated with it a spring element (25) with which the support element (21) is flexibly elastically prestressed in the direction of the use position with a prestressing force (Fv),
wherein the support element (21) is a flap hinged at the bearing point (23) so as to be pivotable about a pivot axis (K),
wherein the bearing point (23) is provided in a side wall (7) delimiting the cargo compartment (3) in a transverse direction (y) of the vehicle, and wherein the support element (21) has an actuation contour (31) upon whose actuation the support element (21) can be set into its non-use position, wherein the support element (21) has a supporting web (27) on which the loading platform (9) can be supported in its upper placement position (I), wherein an outer edge (29) of the loading platform (9) overlaps the supporting web (27) with an excess length (Δy₁),
wherein the supporting web (27) of the support element (21) merges into the actuating contour (31) in the longitudinal vehicle direction (x), and the actuating contour (31) is expanded in the contour profile in the longitudinal vehicle direction (x) by a transverse offset (Δy₂) until it is laterally outside of the outer edge (29) of the loading platform (9).

2. Device according to claim 1, **characterized in that** the support element (21) is adjustable between the use position and a non-use position, and **in that**, in the non-use position of the support element (21), the loading platform (9) is arranged in its lower placement position (II).

3. Device according to claim 2, **characterized in that** the support element (21) has a spring element (33) which, in the lower placement position (II) of the loading platform (9), in the transverse vehicle direction (y) is supported between the support element (21) and the outer edge (29) of the loading platform (9), and **in that** the spring element (33) resets the support element (21) into its non-use position while overcoming a prestressing force (Fv).

4. Device according to any of the preceding claims, **characterized in that,** during an adjustment process of the loading platform (9) from its upper placement position (I) into its lower placement position (II), the outer edge (29) of the loading platform (9) can be brought into contact with the operating contour (31), and in fact under the action of force (F_{B}) for generating a transverse force component with which the support element (21) can be adjusted into its non-use position.

5. Device according to claim 1, **characterized in that** the loading platform (9) is guided in a gate guide (11) in order to implement the adjustment process, and **in that** the loading platform (9) can be placed in a first gate passage (15) defining the lower loading platform placement position (II), or in a second gate passage (17) defining the upper loading platform placement position (I).

6. Device according to claim 5, **characterized in that** the loading platform (9) has at least two mutually adjustable platform segments (34 to 37) which are adjustable relative to one another in the adjustment process and/or in the placement positions (I, II).

7. Device according to claim 6, **characterized in that** the at least two platform segments (34 to 37) of the loading platform (9) are pivotably connected to one another at a fold axis (F₁, F₂, F₃) oriented in the transverse vehicle direction (y).

8. Device according to claim 7, **characterized in that,** in an adjustment process of the loading platform (9) into its lower placement position (II), the platform segment (37) toward the front in the longitudinal vehicle direction (x) can be placed in the cargo compartment (3), and at least the rear platform segment (34) is set in a position inclined upward toward the rear.

9. Device according to claim 8, **characterized in that,** given a pivoting movement (S) in the direction of the lower placement position (II), the outer edge (29) of the rear platform segment (34 to 36) comes into abutment with the actuating contour (31) of the support element (21), and the support element (21) is pushed into its non-use position.

10. Device according to claim 9, **characterized in that,** given a loading platform (9) having more than two platform segments (34 to 37), rotary stops (39) are formed to improve a lifting action of the loading platform (9) given the downward pivoting motion (S) of the support flap (21) at the fold axes (F₁ to F₃); and **in that** the rotary stops (39) have the effect that, in the downward pivoting actuation (S), the platform segments (34, 35) form a mutually rotationally fixed, rigid component joint that ensures a correct transmission of force to the actuation contour (31) of the support element (21).

## Revendications

1. Dispositif pour le réglage en hauteur d'un sol de chargement (9) pour le coffre (3) d'un véhicule, où le sol de chargement (9) peut être posé, dans un processus de réglage, au moins dans une première position de dépôt supérieure (I) dans la direction de la hauteur (z) du véhicule et dans une deuxième position de dépôt inférieure (II) dans la direction de la hauteur (z) du véhicule,
le dispositif présentant au moins un élément d'appui (21) qui est logé de manière réglable en un point d'appui (23) et qui supporte, dans une position d'utilisation, le sol de chargement (9) dans sa position de dépôt supérieure (I) et
un élément à ressort (25) étant associé à l'élément d'appui (21), lequel élément à ressort précontraint l'élément d'appui (21) de manière élastique et souple vers la position d'utilisation avec une force de précontrainte (Fv),
l'élément d'appui (21) étant un clapet articulé au niveau du point d'appui (23) de manière pivotante autour d'un axe de basculement (K),
le point d'appui (23) étant situé dans une paroi latérale (7) délimitant le coffre (3) dans une direction transversale (y) du véhicule et l'élément d'appui (21) présentant un contour d'actionnement (31) qui permet de régler, lors de son actionnement, l'élément d'appui (21) dans sa position de non-utilisation,
l'élément d'appui (21) présentant une traverse porteuse (27), sur laquelle le sol de chargement (9) peut s'appuyer dans sa position de dépôt supérieure (I), un bord externe (29) du sol de chargement (9) chevauchant la traverse porteuse (27) en la dépassant d'un excès (Δy₁),
la traverse porteuse (27) de l'élément d'appui (21) se transformant dans la direction longitudinale (x) du véhicule en contour d'actionnement (31) et le contour d'actionnement (31) étant étendu, dans la forme du contour dans la direction longitudinale (x) du véhicule, d'un déport transversal (Δy₂) jusqu'à latéralement au-delà du bord externe (29) du sol de chargement (9).

2. Dispositif selon la revendication 1, **caractérisé en ce que** l'élément d'appui (21) est réglable entre la position d'utilisation et une position de non-utilisation et **en ce que**, dans la position de non-utilisation de l'élément d'appui (21), le sol de chargement (9) est disposé dans sa position de dépôt inférieure (II).

3. Dispositif selon la revendication 2, **caractérisé en ce que** l'élément d'appui (21) présente un élément à ressort (33), qui s'appuie, dans la position de dépôt inférieure (II) du sol de chargement (9), dans la direction transversale (y) du véhicule, entre l'élément d'appui (21) et le bord externe (29) du sol de chargement (9) et **en ce que** l'élément à ressort (33) recule l'élément d'appui (21) dans sa position de non-utilisation en surmontant une force de précontrainte (Fv).

4. Dispositif selon l'une quelconque des revendications précédentes, **caractérisé en ce que,** lors d'un processus de réglage du sol de chargement (9) depuis sa position de dépôt supérieure (I) dans sa position de dépôt inférieure (II), le bord externe (29) du sol de chargement (9) peut être amené en contact avec le contour d'actionnement (31) et ce sous l'effet d'une force (FB) pour générer une composante de force transversale qui permet de régler l'élément d'appui (21) dans sa position de non-utilisation.

5. Dispositif selon la revendication 1, **caractérisé en ce que** le sol de chargement (9), pour réaliser le processus de réglage, est guidé dans un guidage à coulisse (11) et **en ce que** le sol de chargement (9) peut être posé dans un premier passage de coulisse (15) définissant la position de dépôt inférieure (II) du sol de chargement ou dans un deuxième passage de coulisse (17) définissant la position de dépôt supérieure (I) du sol de chargement.

6. Dispositif selon la revendication 5, **caractérisé en ce que** le sol de chargement (9) présente au moins deux segments de sol (34 à 37) réglables les uns par rapport aux autres, qui peuvent être réglés les uns par rapport aux autres lors du processus de réglage et/ou dans les positions de dépôt (I, II).

7. Dispositif selon la revendication 6, **caractérisé en ce que** les au moins deux segments de sol (34 à 37) du sol de chargement (9) sont reliés les uns aux autres de manière à pouvoir pivoter au niveau d'un axe de pliage (F₁, F₂, F₃) orienté dans la direction transversale (y) du véhicule.

8. Dispositif selon la revendication 7, **caractérisé en ce que,** lors d'un processus de réglage du sol de chargement (9) dans sa position de dépôt inférieure (II), le segment de sol (37) avant dans la direction longitudinale (x) du véhicule peut être déposé dans le coffre (3) et au moins le segment de sol (34) arrière est placé dans une position inclinée vers le haut et vers l'arrière.

9. Dispositif selon la revendication 8, **caractérisé en ce que,** lors d'un mouvement pivotant (S) vers la position de dépôt inférieure (II), le bord externe (29) du segment de sol arrière (34 à 36) vient en butée avec le contour d'actionnement (31) de l'élément d'appui (21) et l'élément d'appui (21) est poussé dans sa position de non-utilisation.

10. Dispositif selon la revendication 9, **caractérisé en ce que,** dans le cas d'un sol de chargement (9) présentant plus de deux segments de sol (34 à 37), pour améliorer un effet de levier du sol de chargement (9) lors du mouvement pivotant (S) du clapet d'appui (21) vers le vas, des butées de rotation (39) sont réalisées au niveau des axes de pliage (F₁ à F₃) et **en ce que** les butées de rotation (39) font que, lors de l'actionnement pivotant (S) vers le bas, les segments de sol (34, 35) forment un assemblage de pièces solidaires en rotation les unes par rapport aux autres, à liaison rigide, qui assure un transfert de force parfait au contour d'actionnement (31) de l'élément d'appui (21).
